# EUROPEAN PATENT APPLICATION

(11) **EP 3 188 116 A1**
(43) Date of publication of application: **05.07.2017**
(21) Application number: 15836294.7
(22) Date of filing: 17.07.2015
(51) Int. Cl.: G06Q 50/04, G06Q 50/06, H02J 3/00, H02J 3/14

(54) **INDUSTRY DEMAND-RESPONSE CONTROL SYSTEM AND INDUSTRY DEMAND-RESPONSE CONTROL METHOD**

(30) Priority: 28.08.2014 JP 2014174379
(71) Applicant: Yokogawa Electric Corporation, Tokyo 180-8750 (JP)
(72) Inventor: SEKI, Akira, Musashino-shi Tokyo 180-8750 (JP); MARUMO, Teruaki, Musashino-shi Tokyo 180-8750 (JP); INOUE, Ken-ichi, Musashino-shi Tokyo 180-8750 (JP); MARUYAMA, Takao, Musashino-shi Tokyo 180-8750 (JP)
(74) Representative: Henkel, Breuer & Partner
(86) International application number: PCT/JP2015/070540
(87) International publication number: WO 2016/031425

(57) **Abstract**

An industry demand-response control system according to an embodiment of the present invention comprises: an energy supply facility which is disposed in an industrial installation, and which supplies electrical and non-electrical energy; a manufacturing facility which is disposed in the industrial installation, and which manufactures a product, using the electrical energy and the non-electrical energy; and a facility control unit which controls the proportion of the electrical energy and the non-electrical energy according to a change in quantity of the manufactured product. The facility control unit: performs control such that a surplus of non-electrical energy which results when the quantity of the manufactured product is reduced in response to an electricity suppression request from an electricity provider is used to supplement reduced electrical energy or converted into electrical energy for resale; and performs control such that the electrical energy which is insufficient due to an increase in the quantity of the manufactured product is supplemented with stockpiled electrical energy, or that said electrical energy is purchased.

## Description

### Technical Field

The present invention relates to an industry demand-response control system and an industry demand-response control method for implementing industrial demand-response in response to a request to suppress electric power demand in an industrial installation.

The present application claims priority based on Japanese patent application 2014-174379, filed on August 28, 2014 and includes herein by reference the content thereof.

### Background Art

If there is an urgent situation with regard to electric power, electricity providers such as electric power companies sometimes request (demand) that consumers who use electric power temporarily cut back on the use of electric power. A demand-response (DR) business model seeking to provide a stable supply of electric power has appeared directed at homes and buildings in which such a demand for a cutback of electric power from an electricity provider and the response to the request from a consumer are formalized, and an electricity provider pays a price (incentive) to consumers that have cut back on electric power (for example, a temporary power savings measure).

Conventionally, there have been energy management systems for consumers, such as the HEMS (home energy management system) directed at managing private dwellings and the BEMS (building energy management system) directed at managing commercial buildings. Efforts have been underway to have these energy management systems accommodate demand-response.

For example, the art disclosed in Patent Document 1 estimates the operation of a device used by a consumer, taking into consideration the environment in which the consumer is placed and, by simulating the energy consumption of the device, calculates the effect if demand-response is done.

For example, the art disclosed in Patent Document 2, directed at social infrastructure that includes humans, is art of a control information system that performs control that includes demand-response. With the art disclosed in Patent Document 2, demand-response is done in a smart city that manages energy in the overall city, treating a small- to mid-sized group of consumers within a community collectively, including control of social infrastructure such as a transport network and lifelines. According to the art disclosed in Patent Document 2, the quality of life (QOL) of residents (consumers) is maintained and improved, and the overall city is optimized.

Industrial installations such as plants, and especially large-scale plants, are generally also large consumers of electric power. In the plant, there are industrial production facilities that are large-power facilities using electric power supplied directly from an electricity provider, and there are cases in which, if there is no adverse effect on production in the plant, the running (operation) of the production facilities can be stopped or the production capacity can be reduced. Some plants provide alternative means for in-house electrical generation in the event of a stoppage of the supply of electric power. For that reason, it can be said that industrial installations such as plants represent a large latent capability of applying industry demand-response (iDR).

In a plant, it is necessary to assure quality, price, and delivery of products and work-in-progress made by the production facilities, and also necessary to assure safety and security. For example, if dangerous materials or substances are processed or produced in a plant, the stoppage or adjustment of the capacity of the production facilities might involve danger. For example, because a plurality of production facilities disposed in a plant are linked, if only a part of the production facilities is stopped or has a reduction in production capacity, there might be cases in which the overall production balance is destroyed and loss occurs. For that reason, accommodating industry demand-response in a plant, that is, power savings in a plant, have been conventionally limited, for example, to partial power savings, such as turning off a part of the lighting devices, or stopping a part of the air-conditioning equipment, and it has not been possible to accommodate the part that influences the production of products. That is, the accommodation of industrial installation such as a plant to industry demand-response had not progressed to the point of handling optimization of the overall facility.

In a plant, there are many cases in which the production domain that produces products and the energy supplying domain that supplies energy for the production of products are separated and operated independently of each other. In the energy supplying domain, energy is constantly supplied, with sufficient remaining power, so that there is no influence on the production of products. That is, the amount of energy, which is remaining power, is wasted energy, and by provided large remaining power, there can be a further increase in the wasted energy.

### Citation List

### Patent Document

[Patent Document 1] Japanese Patent No. 4995958
[Patent Document 2] Japanese Patent Application Publication No. 2013-069084

### Summary of Invention

### Technical Problem

One aspect of the present invention provides an industry demand-response control system and an industry demand-response control method capable of achieving a target of demand savings in industry demand-response and also reducing the reduction in the amount of products produced.

### Solution to Problem

An industry demand-response control system of the a first aspect of the present invention may have an energy supplying facility, installed in an industrial installation, that supplies electrical energy and non-electrical energy that are used when a product is produced; a production facility, installed in the industrial installation, that uses the electrical energy and the non-electrical energy supplied from the energy supplying facility to produce the product; and a facility controller that, in response to increasing and decreasing the quantity of the product produced by the production facility, controls the proportion between the electrical energy and the non-electrical energy and/or the amounts of each of the electrical energy and the non-electrical energy supplied by the energy supplying facility. The facility controller may perform control to use the non-electrical energy that becomes surplus by reducing the quantity of the product produced by the production facility in response to a request from an electricity provider to suppress electric power, either for supplementing the electric power that is reduced by approving the suppression request or for conversion to electric power that is sold, and perform control to supplement an electrical energy shortage caused by increasing the quantity of the product produced by the production facility by stored electric power or by purchased electric power.

An industry demand-response control system of a second aspect of the present invention may have an energy supplying facility, installed in an industrial installation, that supplies electrical energy and non-electrical energy that are used when a product is produced; a production facility, installed in the industrial installation, that uses the electrical energy and the non-electrical energy supplied from the energy supplying facility to produce the product; and a facility controller that, in response to an increase and a decrease of the quantity of the product produced by the production facility, controls the proportion between the electrical energy and the non-electrical energy and/or the amounts of each of the electrical energy and the non-electrical energy supplied by the energy supplying facility. The facility controller may perform control to convert the non-electrical energy that becomes surplus by a reduction of the quantity of the product produced by the production facility in response to a request from an electricity provider to suppress electric power to the electric power and to supply the electrical energy to the production facility, and to suppress the electrical energy to satisfy the suppression request and to minimize the reduction of the quantity of the product produced, and perform control to purchase the electrical energy which is insufficient because of increasing the quantity of the product produced by the production facility and supply the electrical energy to the production facility, and either reply to the effect that less electric power will be suppressed than was requested or not approve the suppression request.

An industry demand-response control system of a third aspect of the present invention may have: a production energy information storage that stores energy composition information that represents the composition of electrical energy and non-electrical energy supplied from an energy storage facility installed in an industrial installation and used when a production facility installed in the industrial installation produces a product; a gain-loss determiner that receives, transmitted from an electricity provider, an electric power suppression request and payment information representing the price per hour of the electric power and compensation if the suppression request is approved, sets and/or provisionally sets, based on the energy composition information, the energy composition of the electrical energy and the non-electrical energy used by the production facility, calculates, based on the payment information and the energy composition information, the gain or loss in the case of producing the product with the set and/or provisionally set energy composition, and determines whether or not to approve the suppression request; and a facility controller that, if a determination has been made by the gain-loss determiner to approve the suppression request, controls the production facility and the energy supplying facility to operate with the set and/or provisionally set energy composition.

The gain-loss determiner in the industry demand-response control system of the third aspect of the present invention may assume a reduced quantity of the quantity of the product produced by the production facility if the suppression request is approved, convert to the electrical energy the non-electrical energy that becomes surplus when the production facility produces the assumed quality of the product, based on the energy composition information, and set and/or provisionally set the energy composition of each energy used by the production facility to supplement the electric power that is reduced by approving the suppression request.

The gain-loss determiner of the industry demand-response control system of the third aspect of the present invention may compare the loss by reducing the quantity of product produced by the production facility and the profit obtained by approving the suppression request and, if the difference between the loss and the profit exceeds a pre-established profit threshold, make a determination to approve the suppression request.

The gain-loss determiner of the industry demand-response control system of the third aspect of the present invention may compare the profit obtained if the quantity of product produced by the production facility is increased and the loss caused by not approving the suppression request and, if the difference between the loss and the profit exceeds a pre-established profit threshold, make a determination not to approve the suppression request.

The gain-loss determiner of the industry demand-response control system of the third aspect of the present invention may instruct the facility controller to make the quantity of the product produced by the production facility greater if the price per hour of the electric power is less than a pre-established price threshold.

The energy composition information in the industry demand-response control system of the third aspect of the present invention may include information representing the ratio between the electrical energy and the non-electrical energy used when the production facility produces a product. The gain-loss determiner may calculate the non-electrical energy amount to become surplus, based on the ratio information included in the energy composition information, and set and/or provisionally set the energy composition of each energy used by the production facility, and the calculated amount of non-electrical energy is converted to the electrical energy and supplied by the energy supplying facility.

The energy composition information in the industry demand-response control system of the third aspect of the present invention may express the composition of the electrical energy and the non-electrical energy as information that includes at least a variable part that is dependent upon the quantity of production of a product by the production facility. The gain-loss determiner may calculate the amount of the non-electrical energy that becomes surplus, based on the variable part information of the non-electrical energy included in the energy composition information and set and/or provisionally set the energy composition of each energy used by the production facility, and the energy supplying facility converts to the electrical energy and supplies the calculated amount of the non-electrical energy.

The gain-loss determiner in the industry demand-response control system of the third aspect of the present invention may set and/or provisionally set the energy composition of each energy used by the production facility, and an amount of the electrical energy in accordance with an amount of the non-electrical energy that becomes surplus, converted from the non-electrical energy to the electrical energy with a conversion efficiency when converting the non-electrical energy to the electrical energy, is supplied to the production facility in combination with the electrical energy supplied from the electricity provider after suppression.

The gain-loss determiner of the industry demand-response control system of the third aspect of the present invention may input to the facility controller an instruction indicating approval of the suppression request if the determination is made to approve the suppression request and the set and/or provisionally set energy composition. The facility controller may transmit to the electricity provider a signal indicating that the suppression request is approved and controls the production facility and the energy supplying facility to operate with the set and/or provisionally set energy composition input from the gain-loss determiner.

The energy composition information in the industry demand-response control system of the third aspect of the present invention may include information that represents the electrical energy amount and the non-electrical energy amount set for each quantity of product produced by the production facility. The gain-loss determiner may calculate the non-electrical energy to become surplus, based on information representing the electrical energy amount and the non-electrical energy amount set for each quantity of product included in the energy composition information, and set and/or provisionally set the energy composition of each energy used by the production facility, and the energy supplying facility converts to the electrical energy and supplies the calculated non-electrical energy amount.

A industry demand-response control method of a fourth aspect of the present invention may have facility controlling that includes controlling the proportion between electrical energy and non-electrical energy and/or the amounts of each of the electrical energy and the non-electrical energy supplied by an energy supplying facility, in response to an increase and a decrease of the quantity of a product produced by a production facility installed in an industrial installation using the electrical energy and the non-electrical energy supplied from the energy supplying facility installed in the industrial installation. The facility controlling may include performing control to use the non-electrical energy that becomes surplus by reducing the quantity of the product produced by the production facility in response to a request from an electricity provider to suppress electric power, either for supplementing the electric power that is reduced by approving the suppression request or for conversion to electric power that is sold, and performing controlling to supplement an electrical energy shortage caused by increasing the quantity of the product produced by the production facility by stored electric power or by purchased electric power.

The industry demand-response control method of a fifth aspect of the present invention may include facility controlling that includes controlling the proportion between electrical energy and non-electrical energy and/or the amounts of each of the electrical energy and the non-electrical energy supplied by an energy supplying facility, in response to an increase and a decrease of the quantity of a product produced by a production facility installed in an industrial installation using the electrical energy and the non-electrical energy supplied from the energy supplying facility installed in the industrial installation. The facility controlling may include performing control to convert the non-electrical energy that becomes surplus by a reduction of the quantity of the product produced by the production facility in response to a request from an electricity provider to suppress electric power to the electrical energy and to supply the electrical energy to the production facility, and suppressing the electric power to satisfy the suppression request and to minimize the reduction of the quantity of the product produced, and performing control to purchase the electrical energy which is insufficient because of increasing the quantity of the product produced by the production facility and to supply the electrical energy to the production facility, and either reply to the effect that less electric power will be suppressed than was requested or not approve the suppression request.

The industry demand-response control method of a sixth aspect of the present invention may have: receiving, transmitted from an electricity provider, an electric power suppression request and payment information representing the price per hour of the electric power and compensation if the suppression request is approved; setting and/or provisionally setting, based on energy composition information representing the electrical energy and the non-electrical energy supplied from an energy supplying facility installed in an industrial installation and used when the production facility produces a product, the energy composition of the electrical energy and the non-electrical energy used by the production facility; calculating the gain or loss in the case of producing the product with the set and/or provisionally set energy composition and, based on the payment information and the energy composition information, determining whether or not to approve the suppression request; and controlling the production facility and the energy supplying facility to operate with the set and/or provisionally set energy composition if a determination has been made to approve the suppression request.

In the industry demand-response control method of the sixth aspect of the present invention, the setting and/or provisional setting of the energy composition of the electrical energy and the non-electrical energy may include: assuming a reduced quantity of the quantity of the product produced by the production facility if the suppression request is approved, converting to the electrical energy the non-electrical energy that becomes surplus when the production facility produces the assumed quality of the product based on the energy composition information, and setting and/or provisionally setting the energy composition of each energy used by the production facility to supplement the electric power that is reduced by approving the suppression request.

In the industry demand-response control method of the sixth aspect of the present invention, the determining whether or not to approve the suppression request may include: comparing the loss by reducing the quantity of product produced by the production facility and the profit obtained by approving the suppression request and, if the difference between the loss and the profit exceeds a pre-established profit threshold, making a determination to approve the suppression request.

In the industry demand-response control method of the sixth aspect of the present invention, the determining whether or not to approve the suppression request may include: comparing the profit obtained if the quantity of product produced by the production facility is increased and the loss caused by not approving the suppression request and, if the difference between the loss and the profit exceeds a pre-established profit threshold, making a determination not to approve the suppression request.

The industry demand-response control method of the sixth aspect of the present invention may further have instructing the facility controller to make the quantity of the product produced by the production facility greater if the price per hour of the electric power is less than a pre-established price threshold.

In the industry demand-response control method of the sixth aspect of the present invention, the energy composition information may include information representing the ratio between the electrical energy and the non-electrical energy used when the production facility produces a product. The setting and/or provisionally setting of the energy composition of the electrical energy and the non-electrical energy may include calculating the amount of the non-electrical energy that becomes surplus, based on the ratio included in the energy composition information included in the energy composition information and setting and/or provisionally setting the energy composition of each energy used by the production facility, and the energy supplying facility converts to the electrical energy and supplies the calculated amount of the non-electrical energy.

In the industry demand-response control method of the sixth aspect of the present invention, the energy composition information may express the composition of the electrical energy and the non-electrical energy as information that includes at least a variable part that is dependent upon the quantity of production of a product by the production facility. The setting and/or provisionally setting the energy composition of the electrical energy and the non-electrical energy may include calculating the amount of the non-electrical energy that becomes surplus, based on the variable part information of the non-electrical energy included in the energy composition information and setting and/or provisionally setting the energy composition of each energy used by the production facility, and the energy supplying facility converts to the electrical energy and supplies the calculated amount of the non-electrical energy.

In the industry demand-response control method of the sixth aspect of the present invention, the setting and/or provisionally setting the energy composition of the electrical energy and the non-electrical energy may include setting and/or provisionally setting the energy composition of each energy used by the production facility, and an amount of the electrical energy in accordance with an amount of the non-electrical energy that becomes surplus, converted from the non-electrical energy to the electrical energy with a conversion efficiency when converting the non-electrical energy to the electrical energy, is supplied to the production facility in combination with the electrical energy supplied from the electricity provider after suppression.

In the industry demand-response control method of the sixth aspect of the present invention, the determining of whether or not to approve the suppression request may include transmitting to the electricity provider a signal indicating that the suppression request is approved.

In the industry demand-response control method of the sixth aspect of the present invention, the energy composition information may include information that represents the electrical energy amount and the non-electrical energy amount set for each quantity of product produced by the production facility. The setting and/or provisionally setting the energy composition of the electrical energy and the non-electrical energy may include calculating the non-electrical energy to become surplus, based on information representing the electrical energy amount and the non-electrical energy amount set for each quantity of product included in the energy composition information, and setting and/or provisionally setting the energy composition of each energy used by the production facility, and the energy supplying facility converts to the electrical energy and supplies the calculated amount of non-electrical energy. Advantageous Effects of Invention

One aspect of the present invention achieves the effect of achieving a target of demand savings in industry demand-response and also reducing the reduction in the amount of products produced.

### Brief Description of Drawings

FIG. 1 shows the general constitution of an industry demand-response control system in an embodiment of the present invention.
FIG. 2 shows an example of the energy composition table used in the industry demand-response control system of the present embodiment.
FIG. 3A shows, in schematic form, the normal operation state of facilities controlled in the industry demand-response control system of the present embodiment.
FIG. 3B shows, in schematic form, the operation state when demand-response is done of facilities controlled in the industry demand-response control system of the present embodiment.
FIG. 4A shows another example of a table in which the energy composition used in the industry demand-response control system of the present embodiment is expressed as a ratio between the electrical energy Ee and the steam energy Es.
FIG. 4B shows another example of a table in which the energy composition used in the industry demand-response control system of the present embodiment is expressed for each production amount.

### Description of Embodiments

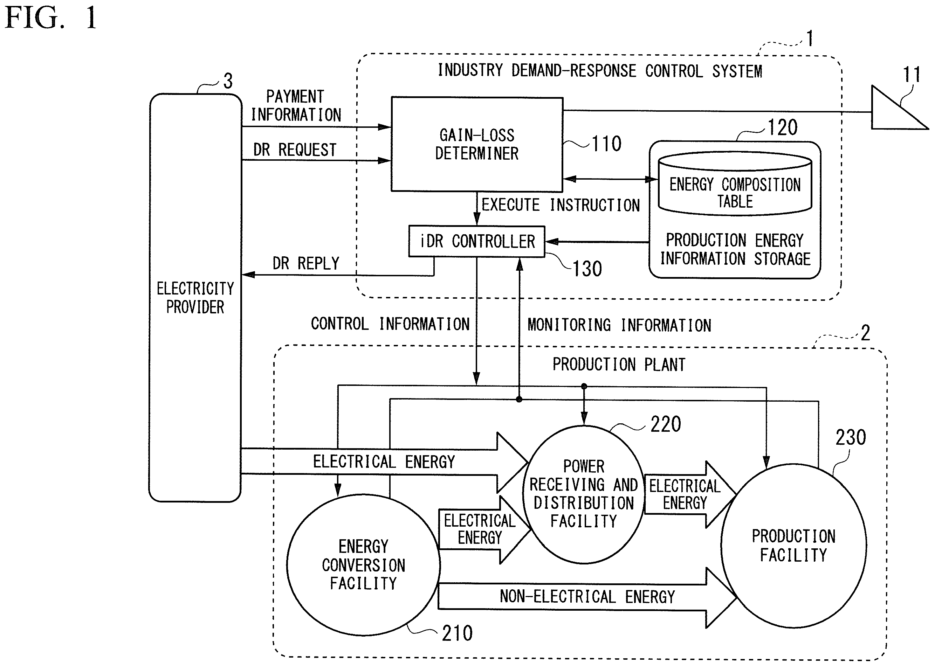

Embodiments of the present invention will now be described, with references to the drawings. FIG. 1 shows the general constitution of an industry demand-response control system of the present embodiment. The industry demand-response control system 1 of the present embodiment, as shown in FIG. 1, links each of the facilities installed in an industrial installation such as a plant with an electricity provider. The industry demand-response control system 1, by controlling the electric power supplied to the production facilities running (operating) in the production plant, executes iDR (industry demand-response).

FIG. 1 shows each of the facilities in the production plant 2 that are controlled by the industry demand-response control system 1 of the present embodiment, along with electricity provider 3 that requests a demand-response of the production plant 2. Although the electricity provider 3 supplies electric power to the production plant 2, which is a consumer, can be variously envisioned to be entity such as an electricity generating company that generates electric power, a power transmission and distribution company that transmits and distributes electric power, or a retail company that sells electric power, to simplify the description to follow, this will be referred to as an "electricity provider 3," regardless of the form of supplying electric power to the consumer (production plant 2). Also, in the description to follow, in the various transmission and reception information (data and signals) by the industry demand-response control system 1, the electricity provider 3 is sometimes a server device of the electricity provider 3.

An energy conversion facility 210, a power receiving and distribution facility 220, and a production facility 230 are installed in the production plant 2.

The energy conversion facility 210 supplies energy other than electric power (hereinafter "non-electrical energy") to the production facility 230. Non-electrical energy is heat energy, such as, for example, steam or hot and cold water converted by combustion from a fuel such as natural gas or heavy oil. The energy conversion facility 210 includes, for example, facilities for converting non-electrical energy to electrical energy, for example, by using steam to drive a turbine to convert steam into electric power, that is, a local electrical generating facility. In the energy conversion facility 210, electrical energy that has been converted from non-electrical energy is supplied to the production facility 230, via the power receiving and distribution facility 220. In the energy conversion, there is also energy that is lost. For that reason, in the energy conversion facility 210, the efficiency η when energy conversion is done is managed using the conversion efficiency as a measure.

The energy conversion facility 210 may have an energy storage facility that stores energy and transmits out energy to the production facility 230 and the power receiving and distribution facility 220 when required. When energy is stored in the energy conversion facility 210, although the energy can be stored in its original form, it also can be stored after converting it to various forms of energy, such as dynamic, mechanical, chemical, thermodynamic, or electrical forms.

The power receiving and distribution facility 220 distributes and supplies electrical energy purchased from the electricity provider 3 to the facilities installed in the production plant 2. FIG. 1 shows the case in which the power receiving and distribution facility 220 supplies electrical energy to the production facility 230. The power receiving and distribution facility 220 supplies to the production facility 230 electrical energy in which electrical energy converted by the energy conversion facility 210 has been added to electrical energy supplied from the electricity provider 3.

The production facility 230 is run (operated) by the non-electrical energy sent from the energy conversion facility 210 and the electrical energy supplied from the power receiving and distribution facility 220 and produces (manufactures) products. That is, in the production plant 2, the production facility 230 corresponds to the production site and is the ultimate consumer that consumes each of the energies.

The electricity provider 3 may request execution of an industry demand-response (iDR) by such a production plant 2, for example if there is an urgent situation with regard to electric power. The server device of the electricity provider 3 transmits payment information along with a DR request signal that represents a request for a demand-response. The payment information includes information of a planned change in the price of electrical energy, expressed as a price per time of the electricity provider 3 supplying electrical energy (for example, information of a planned price for each time period of the day, and information of a payment (incentive) to be paid when the production plant 2 executes a demand-response to reduce electrical energy, and create a so called negawatt). Data of the DR request signal and the payment information transmitted from the server device of the electricity provider 3 to the production plant 2 is received by the industry demand-response control system 1. The received DR request signal and payment information and the like might be processed by an enterprise backbone system (ERP) that is not shown in FIG. 1. The transmission of a DR reply signal representing a reply to a requested demand-response may also be processed by the enterprise backbone system. In this case, the industry demand-response control system 1 is constituted to include the enterprise backbone system. Although the production plant 2 might perform reduction of electrical energy in the product production management, the description below is of the case in which the electricity provider 3 requests a demand response.

The industry demand-response control system 1 receives data of the DR request signal and the payment information transmitted from the server device of the electricity provider 3 to the production plant 2, and determines whether or not it is possible to execute the requested demand-response. The industry demand-response control system 1 transmits a DR reply signal representing a reply to the requested demand-response to the server device of the electricity provider 3 according to the determination result. When executing the requested demand-response, the industry demand-response control system 1 controls the running (operation) of the facilities installed in the production plant 2. The industry demand-response control system 1 has a gain-loss determiner 110, a production energy information storage 120, and an iDR controller 130.

The industry demand-response control system 1 is constituted within a computer system installed in the energy supplying domain or the like that manages the supply of electric power to the facilities in the production plant 2, and is a system that operates in the computer system. For example, the industry demand-response control system 1 is constituted within a processing system that includes a server device or a personal computer (hereinafter "computer server"), and the various functions of the industry demand-response control system 1 operate in the computer server.

FIG. 1 also shows the operating terminal 11 that is connected to the industry demand-response control system 1. The operating terminal 11 is constituted to have, for example, a pointing device such as a mouse and an input device such as a keyboard, and a display device such as a liquid-crystal display, and is the device used when an operator of the production plant 2 operates the industry demand-response control system 1. There is no particular restriction with regard to the constitution of the operating terminal 11. Therefore, the detailed description of the operating terminal 11 will be omitted. However, it is not restricted to being, as shown in FIG. 1, a device different from the industry demand-response control system 1. For example, the constitution may be such that provides the constitution of the operating terminal 11 in the computer server in which the functions of the industry demand-response control system 1 operate or, stated differently, the constitution may be such that the functions of the industry demand-response control system 1 operate on the computer server of the operating terminal 11.

The gain-loss determiner 110 receives a DR request signal transmitted from the server device of the electricity provider 3. The gain-loss determiner 110, based on a table that is stored in the production energy information storage 120 and summarizes the energy composition used in each of the production facilities (hereinafter, "energy portfolio"), determines whether or not to accept (approve) the demand-response request from the electricity provider 3. The energy portfolio is established, giving consideration to the constraints on quality, cost, delivery, safety and the like, with a reserve, that is, so that minor external disturbances or minor unexpected events do not lead to a shortage.

In the determination of whether to accept (approve) a demand-response request, the gain-loss determiner 110 first establishes an energy composition so that each of the facilities achieves a running (operation) state in response to the demand-response. Next, the gain-loss determiner 110, based on the data of the payment information transmitted from the server device of the electricity provider 3, determines the gain or loss if the demand-response request is accepted (approved) with the energy composition set for each of the facilities.

If the determination is to accept the demand-response request, that is, if it is possible with the set energy composition to satisfy both the demand-response realization and profitability, the gain-loss determiner 110 outputs to the iDR controller 130 an execute instruction representing execution of the demand-response. The gain-loss determiner 110 outputs to the iDR controller 130 setting values for each of the facilities to achieve running (operation) states in response to the demand-response, that is, setting values at the time of the energy composition when the determination was made to accept the demand-response request, along with the execution instruction.

The method of the gain-loss determiner 110 setting the energy composition to achieve the running (operation) state responsive to the demand-response request for each facility and the method for determining gain or loss in the demand-response will be described in detail later.

The production energy information storage 120 is storage that stores the energy portfolio with respect to each of the production facilities in the production plant 2. The production energy information storage 120 is, for example, constituted by a database device. The energy portfolio is data that summarizes, as required for each production facility operation state and brand of produced product, information indicating the types of electrical energy and non-electrical energy consumed, and the breakdown of the fixed part and variable part of each.

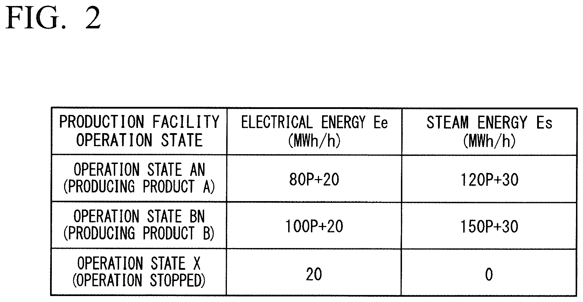

An example of an energy portfolio will now be described. FIG. 2 shows an example of an energy composition table (energy portfolio) used in the industry demand-response control system 1 of the present embodiment. The example of the energy portfolio shown in FIG. 2 shows the energy consumption characteristics of the production facility 230 that can produce (manufacture) product A and product B when steam is used as non-electrical energy.

More specifically, in the energy portfolio example of FIG. 2, in the operation state AN in which the production facility 230 produces product A in the normal state, for production, the electrical energy Ee used in production is 80P+20 MWh/h and the electrical energy Es converted from steam which is non-electrical energy (hereinafter "steam energy") Es is 120P+30 MWh/h. In the energy portfolio example of FIG. 2, in the operation state BN in which the production facility 230 produces product B in the normal state, the electrical energy Ee used in production is 100P+20 MWh/h and the steam energy Es is 150P+30 MWh/h.

In the energy portfolio example of FIG. 2, the P in the expressions representing each of the energies is the amount of the produced products, which is set to an optimal value in accordance with the production capacity of the production facility 230. The units for the production amount P are tons or number of units. That is, the energy portfolio example of FIG. 2 shows by the expressions for the energy used in each of the operation states, the variable part of the energy that is dependent upon the production amount P of the product and the fixed part of the energy that is not dependent upon the production amount P.

Additionally, the energy portfolio example of FIG. 2 shows that, in the operation state X, in which the operation of the production facility 230 is stopped, the electrical energy Ee is 20 MWh/h and the steam energy Es is 0 MWh/h, that is, the production facility 230 uses 20 MWh/h of the electrical energy Ee even when the operation is stopped.

In the energy portfolio example shown in FIG. 2, the units of the electrical energy Ee and the steam energy Es are MWh/h. This is because they represent the energy per unit time (h) with respect to electrical energy (MWh).

The energy portfolio includes as information the ratio between the electrical energy and the non-electrical energy, that is, the ratio between the electrical energy Ee and the steam energy Es, and an energy portfolio of this format may be stored into the production energy information storage 120.

When a demand-response execute instruction is input from the gain-loss determiner 110, the iDR controller 130 transmits to the server device of the electricity provider 3 a DR request signal indicating that the requested demand-response is to be accepted (approved).

Based on setting values for the running (operation) state in response to the demand-response for the various facilities input from the gain-loss determiner 110 together with the execute command, the iDR controller 130 outputs control information to control the facilities installed in the production plant 2, that is each of the energy conversion facility 210, the power receiving and distribution facility 220, and the production facility 230 to the energy composition of a running (operation) state in response to the demand-response.

There is no particular restriction with regard to the method exchanging control information and monitor information between the iDR controller 130 and the various facilities. For example, a dedicated signal line provided between the industry demand-response control system 1 and each of the facilities may be used to perform input and output of control information and monitor information. A control network circuit provided between the industry demand-response control system 1 and each of the facilities may be used to perform transmission and reception of control information and monitor information.

By adopting this type of constitution, the industry demand-response control system 1 determines whether or not to accept (approve) a demand-response, that is, an industry demand-response (iDR), in response to a DR request signal transmitted from the server device of the electricity provider 3. If the industry demand-response control system 1 determines that the request for a demand-response form the electricity provider 3 is to be accepted (approved), it controls the running (operation) of each of the facilities installed in the production plant 2.

Next, the method of the gain-loss determiner 110 of the industry demand-response control system 1 setting the energy composition that places each of the facilities into a running (operation) state in accordance with a demand-response and determining the gain or loss in the demand-response will be described. First, the method of the gain-loss determiner 110 setting the energy composition that places each of facilities into a running (operation) sate in accordance with a demand-response, along with the control of the running (operation) states of each of the facilities installed in the production plant 2, will be described.

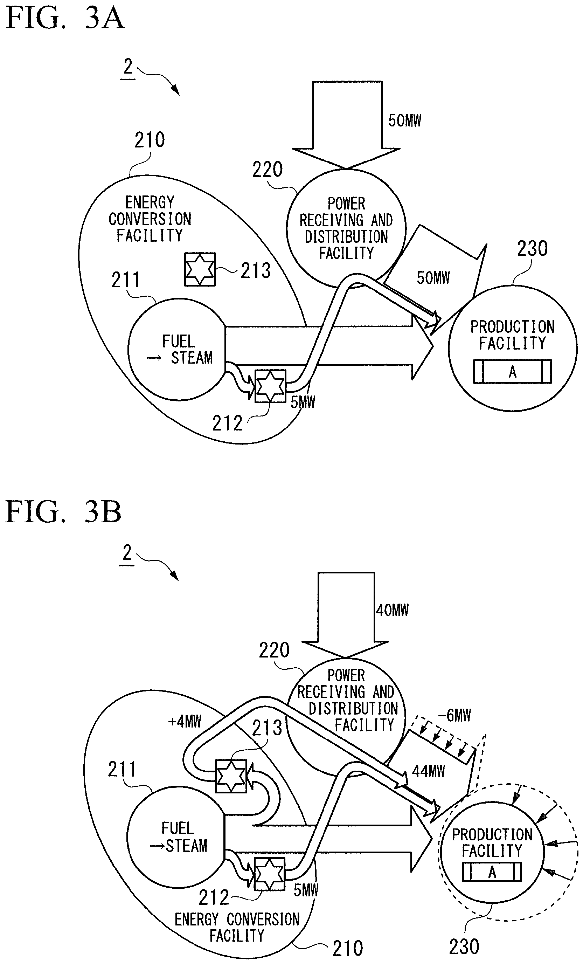

FIG. 3A and FIG. 3B show, in schematic form, the running (operation) states of facilities (the energy conversion facility 210, the power receiving and distribution facility 220, and the production facility 230) that are controlled in the industry demand-response control system 1 of the present embodiment. FIG. 3A and FIG. 3B show the supply path of energy to the production facility 230 in the production plant 2 that produces the product A, when producing in a normal state and when producing in the state in which a demand-response has been executed. More specifically, FIG. 3A shows the electrical energy and non-electrical energy supply path when producing the product A in the normal state, and FIG. 3B shows the electrical energy and non-electrical energy supply path when producing the product A in the state when the demand-response is executed.

First, the case of producing the product A with the production plant 2 in the normal state will be described, using FIG. 3A. The production plant 2 shown in FIG. 3A is a plant that produces the product A using electrical energy and steam, which is non-electrical energy.

More specifically, the energy conversion facility 210 has a boiler 211 that generates steam by the combustion of fuel and local electrical generating facilities 212 and 213 that generate electrical energy by steam generated by the boiler 211 driving a turbine. The local electrical generating facility 213 of the energy conversion facility 210, for example, is a spare local electrical generating facility that is run in place of the local electrical generating facility 212 if, for example, the local electrical generating facility 212 experiences a failure.

The production facility 230 produces the product A by using steam that is sent to it from the energy conversion facility 210 and electrical energy that is supplied from the power receiving and distribution facility 220. The energy conversion facility 210 sends steam produced by the boiler 211 to the production facility 230 in accordance with a pre-established temperature, pressure, flow amount, and the like. The energy conversion facility 210 sends to the local electrical generating facility 212 a part of the stream generated by the boiler 211. The local electrical generating facility 212 sends to the power receiving and distribution facility 220 the electrical energy (steam energy) generated from a part of the stream send to it from the boiler 211. In the one example shown in FIG. 3A in which the product A is produced with the production plant 2 in the normal state, the local electrical generating facility 212 of the energy conversion facility 210 is shown as generating 5 MW of electrical energy from a part of the steam and sending the electrical energy to the power receiving and distribution facility 220.

The power receiving and distribution facility 220 supplies to the production facility 230 electrical energy that is the combination of the electrical energy purchased from the electricity provider 3 and the electrical energy generated by the energy conversion facility 210. The example of the production plant 2 producing the product A in the normal state shown in FIG. 3A is the case of the power receiving and distribution facility 220 receiving electrical energy of 50 MW purchased from the electricity provider 3. This shows the case in which the power receiving and distribution facility 220 supplies the combination of the purchased 50 MW of electrical energy and the 5 MW of electrical energy generated by the energy conversion facility 210, that is, 55 MW of electrical energy to the production facility 230. By doing this, the production facility 230 produces the product A by using the steam send from the energy conversion facility 210 and the 55 MW of electrical energy supplied from the power receiving and distribution facility 220.

Next, the case in which the product A is produced with the production plant 2 in the state in which it executes a demand-response, that is, in the state in which the electrical energy supplied (that can be purchased) from the electricity provider 3 is suppressed will be described, using FIG. 3B. The example of producing the product A in the state shown in FIG. 3B is an example in which the electrical energy is suppressed is an example of the case in which the electrical energy supplied from the electricity provider 3 is suppressed by 10 MW.

Upon receiving a request to suppress 10 MW of electrical energy by a DR request signal transmitted to it from the server device of the electricity provider 3, the gain-loss determiner 110 of the industry demand-response control system 1 sets the energy composition for production of the product A by the production facility 230, based on the energy portfolio stored in the production energy information storage 120. More specifically, the gain-loss determiner 110 assumes as a production amount P an arbitrary value of the number of the reduction in the amount of produced products due to running (operating) in accordance with a demand-response and calculates each of the energies that will become surplus by calculating the energy used in producing the production amount P that is assumed at this stage. The gain-loss determiner 110 sets the energy composition of each of the facilities, based on the energy that will become surplus.

As a specific example, consider the case in which the energy portfolio stored in the production energy information storage 120 that is the energy portfolio shown in FIG. 2 and the production facility 230 is producing the product A. More specifically, consider the case in which, based on the operation state AN of the energy portfolio indicated in FIG. 2, the production facility 230 uses the electrical energy Ee of 80P+20 MWh/h and the steam energy Es of 120P+30 MWh/h to produce the product A.

In the description to follow, the efficiency η when the local electrical generating facility 213 of the energy conversion facility 210 converts steam to electric power is taken to be 0.5. Also, in order to simplify the description below, the case in which the running (operation) of each of the facilities is controlled in units of hours will be described. Therefore, in the description to follow, the units of the electrical energy Ee and the steam energy Es are MW.

The gain-loss determiner 110 assumes that the production amount of the product A to be reduced by accepting a demand-response is 0.05 tons. First, the gain-loss determiner 110 calculates the electrical energy Ee that is no longer used when the assumed production amount is reduced. In the operation state AN, because the electrical energy Ee is 80P+20 MW, from the 80P MW resulting by subtracting the fixed part of 20 MW from the variable part of the electrical energy Ee that depends on the production amount P, 80 * 0.05 = 4 MW is calculated as the electrical energy Ee that is no longer used by reducing the production amount of the product A.

Continuing, when the production amount is reduced as assumed, the steam that is sent from the energy conversion facility 210 is no longer used, that is, becomes surplus, and the gain-loss determiner 110 calculates the steam energy Es usable by the local electrical generating facility 213 to generate electricity. In the operation state AN, because the steam energy Es is 120P+30 MW, from the variable part of the steam energy Es that depends on the production amount P, which results in 120P by removing the fixed part of 30 MW, 120 * 0.5 = 6 MW is calculated as the surplus steam. From this calculated surplus steam of 6 MW, by the local electrical generating facility 213 converting this to electrical energy at an efficiency η of 0.5, the calculation is that 6 * 0.5 = 3 MW of steam energy Es can generate electricity.

If the sum of the electrical energy Ee that is no longer used and the steam energy Es that can be used to generate electricity from surplus steam is greater than the electrical energy suppressed by the demand-response, the gain-loss determiner 110 can determine that demand-response requested by the electricity provider 3 can be achieved. In this case, because the sum of the electrical energy Ee that is no longer used, which is 4 MW, and the steam energy Es that can be generated as electricity from the surplus steam, which is 3 MW, is 7 MW, the gain-loss determiner 110 determines that this does not satisfy the electrical energy of 10 MW suppressed by the demand-response, and that the demand-response cannot be achieved.

The gain-loss determiner 110 then assumes a further increase of the production amount of the product A to be reduced by accepting the demand-response, for example, to 0.075 ton. Similar to the above method, the gain-loss determiner 110 calculates the electrical energy Ee that is no longer used and the steam energy Es that can be generated as electricity from the surplus steam. In this case, the electrical energy Ee that is no longer used is calculated as 80 * 0.075 = 6 MW. The surplus steam is 120 * 0.075 = 9 MW, and the steam energy Es that can be generated from this surplus steam is calculated as 9 * 0.5 = 4.5 MW.

In this case, the sum of the electrical energy Ee no longer used and the steam energy Es that can be generated as electricity from the surplus steam is 6 + 4.5 = 10.5 MW, and the gain-loss determiner 110 determines that the electrical energy (10 MW) suppressed by accepting the demand-response is satisfied, and that the demand-response can be achieved.

In the example of a case in which the product A is produced in the state in which the electrical energy is suppressed, as shown in FIG. 3B, the power receiving and distribution facility 220 accepts 40 MW of electrical energy purchased from the electricity provider 3, and the local electrical generating facility 213 in the energy conversion facility 210 sends 4 MW of electrical energy that is generated from surplus steam to the power receiving and distribution facility 220. The case shown is one in which the electrical energy of 44 MW, which is the combination of the purchased 40 MW of electrical energy and the 4 MW of electrical energy sent from the energy conversion facility 210, is taken as the electrical energy purchased from the electricity provider 3. And in this case the power receiving and distribution facility 220 supplies 49 MW of electrical energy to the production facility 230, which is the combination of 44 MW of electrical energy and the 5 MW of electrical energy generated by the local electrical generating facility 212 of the energy conversion facility 210. By doing this, the production facility 230 uses the steam sent from the energy conversion facility 210 and the 49 MW of electrical energy supplied from the power receiving and distribution facility 220 to produce 0.075 ton less of product A.

The gain-loss determiner 110 sets or provisionally sets the energy composition that reduces the production amount by 0.075 ton, as shown in FIG. 3B, as the energy composition that places the various facilities in running (operation) states that are in accordance with a demand-response.

In the example shown in FIG. 3B in which product A is produced with the electrical energy suppressed, the state shown is one in which the production amount P of the product A produced by the production facility 230 is less than the production plant 2 producing the product A in the normal state as shown in FIG. 3A, the production amount P in the normal state indicated by the dashed line is reduced to the production amount P indicated by the solid line in the state in which the electrical energy is suppressed. That is, this shows the case in which the production amount P of the product A is reduced by 0.075 ton by the energy composition set or provisionally set by the gain-loss determiner 110.

In this manner, the gain-loss determiner 110 makes a determination to set and/or provisionally set the energy composition so that the requested demand-response can be accepted, by considering as well the steam energy Es that can be generated from surplus steam by a reduction in the production amount.

Consider the electrical energy Ee supplied to the production facility 230. As described above, although accepting a demand-response reduces the electrical energy supplied to the power receiving and distribution facility 220 from the electricity provider 3 by 10 MW, the electrical energy Ee that is no longer to be used if the production amount is reduced by 0.075 ton is only 6 MW. That is, even if the production facility 230 reduces the production of the product A by 0.075 ton, the electrical energy Ee to be used is greater than the electrical energy supplied from the electricity provider 3 after suppression (40 MW), so that a shortage occurs. In the industry demand-response control system 1, this electrical energy shortage is supplemented by steam energy Es generated by the local electrical generating facility 213 of the energy conversion facility 210. This enables production of a greater amount of product A than the amount of product A in the case of simply suppressing the electrical energy by 10 MW (because Es=80P, P=Es/80=10/80=0.125 ton), in which case the production amount is reduced, even if the electrical energy Ee is suppressed by 10 MW by accepting a request for a demand-response from the electricity provider 3. That is, in the industry demand-response control system 1, in addition to enabling suppression of electrical energy in a requested demand-response, it is possible to suppress the reduction in the production amount of the product by acceptance of the demand-response.

After that, if a demand-response is executed that runs (operates) the various facilities by the set energy composition, the gain-loss determiner 110 determines whether or not the production plant 2 can obtained the desired profit, that is, determines whether or not there is a gain or loss by using the set energy composition and accepting a demand-response request.

The method of determining whether there is a gain or a loss in a demand-response will now be described. The determination of gain or loss in a demand-response made by the gain-loss determiner 110 is performed by considering the payment information sent from the electricity provider 3, and a comparison between the profit when producing product (the product A in the examples of FIG. 3A and FIG. 3B), based on the energy portfolio stored in the production energy information storage 120 and a pre-established profit threshold. The profit threshold represents the value that is set based on the cost varying according to the handling of demand-response, and that is a value of profit desired to be achieved by the production plant 2.

If both the achievement of the demand-response and the achievement of the profit are obtained, the gain-loss determiner 110 makes the final determination to accept the request for a demand-response from the electricity provider 3. That is, depending upon whether or not the desired profit can be achieved if the demand-response is executed with the set energy composition, the gain-loss determiner 110 determines whether or not to accept the request for a demand-response from the electricity provider 3. In the determination of whether or not to accept the request of a demand-response, the gain-loss determiner 110 makes the following computations.

Based on payment information transmitted from the electricity provider 3 and on the energy portfolio stored in the production energy information storage 120, the gain-loss determiner 110 first calculates the sum amount of the incentive (compensation) due to execution of the demand-response with the set energy composition and the electrical energy purchase price reduction accompanying a reduction of the amount of products produced (in the examples shown in FIG. 3A and FIG. 3B, the reduction by 0.075 ton), that is, the cost reduction amount. The gain-loss determiner 110 calculates the sales amount reduction (the loss amount) for the case in which, using the set energy composition, the amount of produced product is reduced by execution of the demand-response with the set energy composition. Additionally, the gain-loss determiner 110 calculates the difference between the cost reduction amount and the sales amount. After that, the gain-loss determiner 110 compares the difference amount between the calculated cost reduction amount and the sales amount with the profit threshold and, if the difference amount between the cost reduction amount and the sales amount exceeds the profit threshold, that is, if the determination can be made that it is profitable even if a demand-response is executed at the set energy composition and electrical energy is suppressed, it determines to accept the demand-response request from the electricity provider 3.

The gain-loss determiner 110, in accordance with the determination result, outputs an instruction to execute a demand-response and the setting values of the set energy composition to the iDR controller 130. In response to the execute instruction, the iDR controller 130 transmits to the server device of the electricity provider 3 a DR reply signal indicating acceptable (approval) of the requested demand-response and control information for the energy composition in accordance with the setting values of each facility, that is, to control to the running (operation) state for executing the demand-response, each being output to each facility with the appropriate timing. By doing this, each of the facilities installed in the production plant 2 produces the product in a running (operation) state in accordance with the demand-response.

As described above, in the industry demand-response control system 1, centralized control can be done of the running (operation) of the facilities installed in the production plant 2, based on the energy portfolio. The method of the industry demand-response control system 1 controlling each of the facilities is one in which the steam energy Es is generated from the surplus steam and supplements the electrical energy that is suppressed by a demand-response, enabling effective use of energy and contribution to energy savings. This is because, although the boiler 211 usually requires time to start up and it is difficult to frequently stop it and restart supplying steam or to greatly change the amount of steam, and steam can be wasted by accepting a demand-response, by operating the local electrical generating facility 213, which does not operate in the normal state, it is possible to utilize the steam that would be wasted (surplus steam) as electrical energy. Furthermore, because the control of supplying electrical energy to the production facility 230 and the starting of the operation of the local electrical generating facility 213, that is, the electrical generation can be done simultaneously in parallel, each of the facilities can be controlled with good efficiency.

The gain-loss determiner 110, in accordance with the determination result, if the determination is made not to accept a request for a demand-response from the electricity provider 3, outputs a demand-response non-execute instruction to the iDR controller 130 and, in response to the demand-response non-execute instruction input from the gain-loss determiner 110, the iDR controller 130 transmits to the server device of the electricity provider 3 a DR request signal indicating non-acceptance (refusal) of the requested demand-response. The method of replying with a non-acceptance (refusal) of a requested demand-response can take various forms. For example, a constitution may be adopted in which the gain-loss determiner 110 outputs to the iDR controller 130 information of the amount of electrical energy requested to be suppressed by the DR request signal transmitted from the server device of the electricity provider 3, and the iDR controller 130 may transmit to the server device of the electricity provider 3 a DR response signal indicating non-acceptance (refusal) of a demand-response, along with information of the amount of requested electrical energy that can be suppressed.

The number of times the gain-loss determiner 110 performs determination of whether or not to accept a requested demand-response is not limited to one time. That is, even if the gain-loss determiner 110 has determined at this time that a demand-response request cannot be accepted, the determination of whether or not to accept the demand-response request from the electricity provider 3 may be made repeatedly after performing the setting again of the energy composition for executing the demand-response and using this reset energy composition. If the gain-loss determiner 110 performs the determination only one time, the above-noted "provisionally sets" can be read as being "sets." For example, in addition to the above-described automatic determination, an operator having authority, such as the plant head can make the determination in place of the gain-loss determiner 110, and can output an execute instruction of non-execute instruction forcibly by a manual operation from the operating terminal 11. In the same manner, the setting of the energy composition, the provisional setting, and maintenance tasks such as updating and version revisions made by manual operations from the operating terminal 11.

In this manner, the gain-loss determiner 110 considers a loss or a gain change by the production plant 2 in handling a demand-response when determining whether or not to accept a demand-response request from the electricity provider 3. This enables the production plant 2 controlled by the industry demand-response control system 1 to both achieve realization of a demand-response (iDR) requested by the electricity provider 3 and achieve profit for the production plant 2.

In the foregoing description, for an assumed reduction in the production amount of the product A of 0.075 ton by accepting a demand-response, it is possible to generate 4.5 MW of steam energy Es. However, in the example of producing the product A with the electrical energy suppressed as shown in FIG. 3B, the 4 MW of steam energy Es supplements the electrical energy purchased from the electricity provider 3. That is, the state is one in which 0.5 MW of steam energy Es is excluded. For that reason, the gain-loss determiner 110 sets the energy composition so that 44.5 MW of electrical energy, which is the combination of 40 MW of electrical energy purchased from the electricity provider 3 and 4.5 MW of electrical energy generated from the surplus steam by the local electrical generating facility 213 of the energy conversion facility 210, is supplied to the production facility 230. This enables the production facility 230 to further produce the product A commensurate with the 0.5 MW, that is, to increase the production of the product A by an amount commensurate with 0.5 MW.

If the amount of production of the product A is not to be increased in accordance with the 0.5 MW surplus of steam energy Es, the gain-loss determiner 110 can set the energy composition so that the energy conversion facility 210 stores the surplus 0.5 MW of steam energy Es in an energy storage facility for later utilization. By suppressing to achieve 0.5 MW greater than the 10 MW requested by the electricity provider 3, more incentive (payment) is paid from the electricity provider 3 and, by selling the 0.5 MW of steam energy Es as electricity, it is also possible to reduce the cost of the product A. The selling of electricity of the steam energy Es is done by an electricity selling facility not shown in FIG. 1.

FIG. 3B, a case in which the local electrical generating facility 213 of the energy conversion facility 210 generated the steam energy Es from the surplus steam has been described. However, the method of generating steam energy Es from the surplus steam is not restricted to that described above. For example, if the local electrical generating facility 212 of the energy conversion facility 210 can generate not only the usual steam energy Es, that is, the 5 MW of electrical energy, but also the additional amount of steam energy Es in accordance with the surplus steam, the energy composition can also be set so that, without running the local electrical generating facility 213, the local electrical generating facility 212 generates the steam energy Es of 5 + 4.5 = 9.5 MW.

The above-described computational processing in the gain-loss determiner 110 is the processing for the case of focusing on the suppression of the electrical energy based on the payment information transmitted from the electricity provider 3. In converse, however, seen from the production plant 2, the focus can be on achieving profitability by increasing the production amount of a product using inexpensive electrical energy supplied from the electricity provider 3 during times of the day at which demand-responses are executed. That is, if the price per unit time of electric power supplied from the electricity provider 3 is below a pre-established price threshold, profitability is established by increasing the amount of product produced.

In this case, based on the payment information transmitted from the electricity provider 3 and the energy portfolio stored in the production energy information storage 120, the gain-loss determiner 110 first calculates the sum of the amount of penalty (fine) by not executing a demand-response and the electrical energy purchase price increase accompanying an increase in the amount of product produced, that is, the cost increase. This cost increase amount corresponds to the amount of loss by the increase in the amount of the product produced. The gain-loss determiner 110 calculates the sales amount increase if the amount of product produced increases in according with the increase in electrical energy. Additionally, the gain-loss determiner 110 calculates the difference between the cost increased amount and the sales amount. After that, the gain-loss determiner 110 compares the amount of the difference between the calculated cost increase amount and the sales amount with the profit threshold and, if the difference amount between the cost increase amount and the sales amount exceeds the profit threshold, that is, if the determination can be made that it is profitable to increase the electrical energy without executing a demand-response, the determination is made not to accept the request for a demand-response from the electricity provider 3. In this case, the profit threshold for performing the comparison may be the same as the profit threshold in the case of focusing on the suppression of the electrical energy or may be a different threshold.

The gain-loss determiner 110, in accordance with the determination result, does not output an execute instruction for the demand-response to the iDR controller 130. Therefore, the iDR controller 130 does not transmit to the server device of the electricity provider 3 a DR request signal indicating acceptance of the requested demand-response. The iDR controller 130 may be made to transmit (notify) to the server device of the electricity provider 3 a signal that requests the maximum electrical energy to be supplied.

Even in the case of not accepting the request for a demand-response from the electricity provider 3 based on this idea, the gain-loss determiner 110 sets the energy composition in the direction that increases the amount of product produced. In this case, because there is no surplus steam, although the supply paths of electrical energy and non-electrical energy are the same as the supply paths for electrical energy and non-electrical energy when the product A is produced in the normal state, as shown in FIG. 3A, the state is one in which a greater amount of electrical energy is purchased from the electricity provider 3. Therefore, the gain-loss determiner 110 outputs to the iDR controller 130 setting values for an energy composition that is set in the direction that increases the amount of product produced, and the iDR controller 130 performs control so that various facilities are run (operated) with an energy composition in accordance with each of the setting values thereof.

In the above-noted description, the description is for the case in which, by comparing the difference between the calculated cost decrease or increase and the sales amount with a profit threshold, a determination is made automatically by the gain-loss determiner 110 of whether or not to accept a demand-response request from the electricity provider 3. However, for example, the constitution can be made such that the gain-loss determiner 110 may perform up to the calculation of the cost decrease or increase and sales amount or the calculation of the difference amount therebetween and, for example, an operator of the production plant 2 makes a final judgment by verifying the information of the calculated amount made by the gain-loss determiner 110, that is, makes a final manual determination of whether or not to accept a request for a demand-response from the electricity provider 3. In this case, the operator of the production plant 2 operates the operating terminal 11 and inputs the final determination result into the gain-loss determiner 110 and, in accordance with the final input determination result, the gain-loss determiner 110 outputs a demand-response execute instruction and the setting values for the set energy composition to the iDR controller 130.

If the production amount of a product using inexpensive electrical energy supplied by the electricity provider 3 is increased, this can be done not at a time of day when a demand-response is executed, but rather at a time of the day without regard to the time of the day in which a demand-response is executed. In this case, the gain-loss determiner 110 makes a determination to increase the amount of production of the product, based on payment information transmitted from the electricity provider 3.

In the above-noted description, in the method of the industry demand-response control system 1 controlling the facilities shown in FIG. 3A and FIG. 3B, the description is for the case of the gain-loss determiner 110 controlling the facilities based on the energy portfolio indicated in FIG. 2. However, for example, if the number of types of product produced (manufactured) is small or the number of types of production patterns is not large, the various facilities may be controlled by taking the ratio between the electrical energy Ee and the steam energy Es as being fixed.

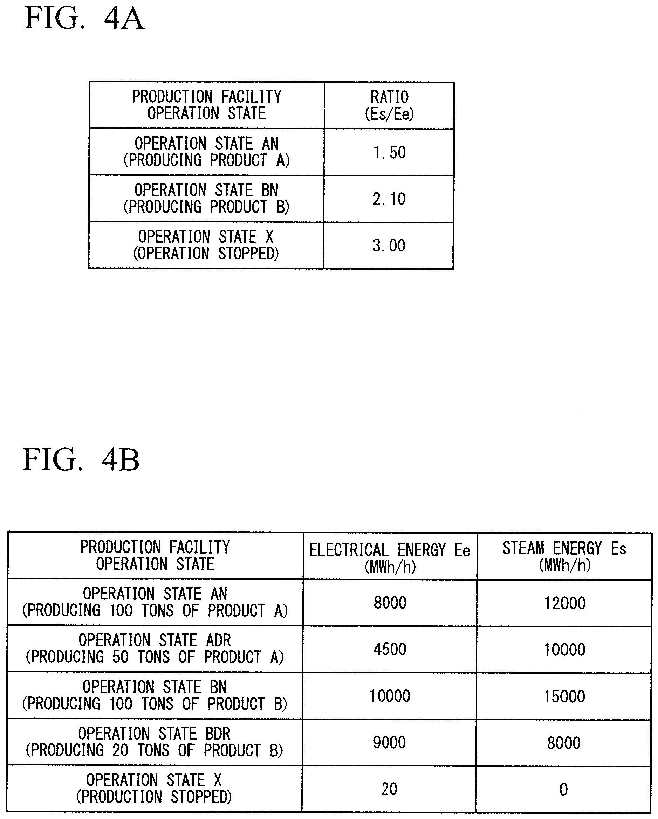

Next, another example of an energy portfolio will be described. FIG. 4A and FIG. 4B show other examples of tables of the energy composition (energy portfolios) used in the industry demand-response control system of the present embodiment. The energy portfolio example shown in FIG. 4A is an example of an energy portfolio in which the energy composition used in the production facility 230 that can produce (manufacture) each of the products A and B is expressed as ratios between the electrical energy Ee and the steam energy Es when producing (manufacturing) each of the products. The energy portfolio example shown in FIG. 4B is an example of an energy portfolio in which the energy composition used in the production facility 230 that can produce (manufacture) the products A and B is expressed for each amount of production when producing (manufacturing) each of the products.

First, the example of the energy portfolio shown in FIG. 4A will be described. FIG. 4A shows the ratio between the electrical energy Ee and the steam energy Es for the case of producing each of the products in the normal state.

More specifically, the example of the energy portfolio of FIG. 4A shows that the ratio of the steam energy Es to the electrical energy Ee used when the production facility 230 is producing the product A in the normal AN operation state is 1.50. This means that, in the operation state AN, by reducing the electrical energy Ee by 1 MWh/h or increasing the electrical energy Ee by 1 MWh/h, the steam energy Es is reduced or increased by the equivalent of 1.50 MWh/h.

The energy portfolio example of FIG. 4A shows that the ratio of the steam energy Es to the electrical energy Ee used when the production facility 230 is producing the product B in the normal BN operation state is 2.10. This means that, in the operation state BN, the same as in the operation state AN, by increasing or reducing the electrical energy Ee by 1 MWh/h, the steam energy Es is increased or reduced by the equivalent of 2.10 MWh/h.

The energy portfolio of FIG. 4A shows that the ratio of the steam energy Es to the electrical energy Ee when the production facility 230 is in the operation state X, in which the operation is stopped, is 3.00. This means that, even if the production facility 230 is in the state in which operation is stopped, similar to the various operation states, in response to an increase or decrease of 1 MWh/h in electrical energy Ee, there is an increase or decrease in the steam energy Es of the equivalent of 3.00 MWh/h.

When control is done to place the facilities installed in the production plant 2 into a running (operation) state responsive to a demand-response in response to the DR request signal transmitted from the server device of the electricity provider 3, the gain-loss determiner 110 can easily, from the energy portfolio shown in FIG. 4A, calculate the amount of electrical energy (suppression amount) can be suppressed in the demand-response.

More specifically, consider the operation state AN. If the production capacity of the production facility 230 is reduced so that the electrical energy Ee is reduced by 100 MW by accepting a demand-response, it can be seen that the steam energy Es used in producing the product A can be reduced by 100 * 1.50 = 150 MW. When steam is converted to electric power by the local electrical generating facility 213 of the energy conversion facility 210 with an efficiency η of 0.8, it can be seen that, from the reduced 150 MW of the steam energy Es in response to the demand-response, it is possible to generate 150 * 0.8 = 120 MW of steam energy. From this, the gain-loss determiner 110 can easily calculate that the amount of electrical energy Ee suppression by accepting the demand-response is the directly suppressed 100 MW with the 120 MW that can be suppressed by utilizing the local electrical generating facility 213 added thereto, that is, 100 + 120 = 220 MW. The gain-loss determiner 110 can make a determination of whether or not to accept (approve) a demand-response request from the electricity provider 3, based on the calculated electrical energy Ee suppression amount.

Continuing, the energy portfolio example shown in FIG. 4B will now be described. FIG. 4B shows the electrical energy Ee and the steam energy Es for the case of producing each of the products in the normal state and for the case of producing each of the products with acceptance of a demand-response, in association with amounts of each of the products produced by the production facility 230.

More specifically, the energy portfolio example of FIG. 4B shows that the electrical energy Ee and the steam energy Es used in the normal operation state AN, that is, when the production facility 230 produces 100 tons of the product A, are 8000 MWh/h and 12,000 MWh/h, respectively. The energy portfolio example of FIG. 4B shows that the electrical energy Ee and the steam energy Es in the operation state ADR, that is, when a demand-response is accepted and the production facility 230 produces 50 tons of the product A, are 4500 MWh/h and 10,000 MWh/h, respectively.

The energy portfolio example of FIG. 4B shows that the electrical energy Ee and the steam energy Es used in the normal operation state BN, that is, when the production facility 230 produces 100 tons of the product B, are 10,000 MWh/h and 15,000 MWh/h, respectively. The energy portfolio example of FIG. 4B shows that the electrical energy Ee and the steam energy Es in the operation state BDR, when a demand-response is accepted when the production facility 230 produces 20 tons of the product B, are 9000 MWh/h and 8000 MWh/h, respectively.

Additionally, the energy portfolio example of FIG. 4B shows that, similar to the energy portfolio example shown in FIG. 2, in the operation state X, in which the operation of the production facility 230 is stopped, the electrical energy Ee is 20 MWh/h, and the steam energy Es is 0 MWh/h.

The energy portfolio shown in FIG. 4B is used when the relationship between the amount of product produced and the each of the energies used to produce the product is complex and cannot be expressed and calculated as a simple ratio between the electrical energy Ee and the steam energy Es, unlike the energy portfolio shown in FIG. 4A. As can be understood from FIG. 4B, with the energy portfolio of FIG. 4B, the values of the electrical energy Ee and the steam energy Es are not variables with respect to the production amount P as in the energy portfolio example shown in FIG. 2, but are fixed values in accordance with the scale of production (production amount). This is because, with the energy portfolio of FIG. 4B, the energy portfolio is expressed for each of the production amounts of products produced in each of the operation states. When the relationship between the production amount and each of the energies is complex, as shown in FIG. 4B, by expressing the amount of each energy used with patterns of combination of specific product brands and production amounts, the gain-loss determiner 110 can, in response to a DR request signal transmitted from the server device of the electricity provider 3, easily calculate the electrical energy amount (suppression amount) for controlling the running (operation) states of the facilities installed in the production plant 2 in accordance with a demand-response.

More specifically, for example, consider a transition from the operation state AN to the operation state ADR, in which the production amount is halved. If the transition is to be made from the energy portfolio shown in FIG. 4B from the operation state AN to the operation state ADR, the gain-loss determiner 110 reduces the electrical energy Ee by 8000 - 4500 = 3500 MW and reduces the steam energy Es by 12,000 - 10,000 = 2000 MW. The gain-loss determiner 110 can understand that, when the local electrical generating facility 213 of the energy conversion facility 210 converts steam to electric power with an efficiency η of 0.8, the 2000 * 0.8 = 1600 MW of electricity can be generated from the steam energy Es of 2000 MW reduced by accepting a demand-response. From this, the gain-loss determiner 110 can easily calculate that, by transitioning from the operation state AN to the operation state ADR by accepting a demand-response and halving the production amount, it is possible to suppress 5100 MW of electrical energy Ee, which is the directly reduced 3500 MW with the 1600 MW generated by the local electrical generating facility 213 added thereto. The gain-loss determiner 110, based on the calculated suppressed amount of the electrical energy Ee, can make a determination of whether or not to accept (approve) a request for a demand-response from the electricity provider 3.

FIG. 4B shows an example in which the energy portfolio includes combinations of the two energy values for two patterns used when producing the same product, these being the operation states (operation state AN and operation state BN) producing products in the normal state, and the operation states (operation state ADR and operation state BDR) accommodating a demand-response. However, for example, a plurality of combinations of each of the energies used when producing the same product may be described in the energy portfolio. This enables the gain-loss determiner 110 to be constituted so as to select a pattern of the optimal energy combination from a plurality of patterns described in the energy portfolio, without performing the computation to calculate the electrical energy suppressed by accepting a demand-response from the energy portfolio shown in FIG. 2.

As described above, according to the embodiments of the present invention, the energy other than electric power (steam energy in the embodiment) that is made surplus when the production amount is reduced by the running (operation) state when a request for a demand-response from an electricity provider, that is, an industry demand-response (iDR) request is accepted is calculated based on an energy composition table (energy portfolio). The calculated energy other than electric power that will be surplus is converted and the demand-response is accepted, so as to set an energy composition that supplements the suppressed electrical energy. After that, the gain or loss in the case of accepting a demand-response with the set energy composition is calculated based on the energy composition table, and a final determination is made of whether or not to accept the demand-response request from the electricity provider 3. In the embodiments of the present invention, this enables not only the achievement of suppression of electrical energy in the requested demand-response, but also suppression of the reduction of the production amount of product caused by accepting the demand-response request. In the embodiments of the present invention, energy other than electric power that becomes surplus by accepting a demand-response can be effectively utilized, thereby contributing to energy savings.

In the embodiments of the present invention, the case in which the non-electrical energy used by the production facility 230 in producing products has been described as being steam. However, the non-electrical energy is not restricted being steam as shown in the present embodiment and may be any type of energy that becomes surplus when producing products by executing an industry demand-response (iDR) and can be converted to electrical energy, for example compressed air, hot water, or cold water, which can achieve the same effect by applying the idea of the present invention.

For example, a program for implementing the processing by the various constituent elements in the industry demand-response control system 1 shown in FIG. 1 may be recorded in a computer-readable recording medium and the program recorded in the recording medium may be read into a computer system, which executes it so as to perform the various above-described processing related to the industry demand-response control system of the present embodiment. The term "computer system" used herein may be one that includes an operating system and hardware such as peripheral devices. In the case in which a WWW system is used, "computer system" may include a webpage providing (or displaying) environment. A "computer-readable recording medium" refers to a storage device such as a flexible disk, an opto-magnetic disk, a ROM, a writable non-volatile memory such as a flash memory, a portable medium such as a CD-ROM, a hard-disk built into a computer system.

"Computer-readable recording medium" includes one that holds a program for a certain period of time, such as a volatile memory (for example, a DRAM (dynamic random-access memory)) within a computer system serving as a server or client when a program is transmitted via a network such as the Internet or a communication line such as a telephone line. The above-noted program may be transferred from a computer system that includes a storage device or the like into which the program is recorded to another computer system via a transfer medium, or by a transfer wave in a transfer medium. The "transfer medium" that transfers the program refers to a network such as the Internet or a medium having a function of transferring information, such as a communication circuit (line) such as a telephone line. The above-noted program may be for implementing a part of the above-described functions. Additionally, the above-noted functions may be implemented by a so-called difference file (difference program) in combination with a program in which the above-described functions have already been recorded in a computer system.

Although an embodiment of the present invention has been described above, with references to the drawings, the specific constitution is not restricted to the embodiment, and includes various modifications within the scope of the spirit of the present invention.

### Reference Signs List

- 1: Industry demand-response control system
- 110: Gain-loss determiner
- 120: Production energy information storage
- 130: iDR controller (facility controller)
- 11: Operating terminal (industry demand-response control system)
- 2: Production plant (industrial installation)
- 210: Energy conversion facility (energy supplying facility)
- 211: Boiler (energy supplying facility)
- 212, 213: Local electrical generating facility (energy supplying facility)
- 220: Power receiving and distribution facility (energy supplying facility)
- 230: Production facility
- 3: Electricity provider

## Claims

1. An industry demand-response control system, comprising:
an energy supplying facility, installed in an industrial installation, that supplies electrical energy and non-electrical energy that are used when a product is produced;
a production facility, installed in the industrial installation, that uses the electrical energy and the non-electrical energy supplied from the energy supplying facility to produce the product; and
a facility controller that, in response to increasing and decreasing the quantity of the product produced by the production facility, controls the proportion between the electrical energy and the non-electrical energy and/or the amounts of each of the electrical energy and the non-electrical energy supplied by the energy supplying facility,
wherein the facility controller
performs control to use the non-electrical energy that becomes surplus by reducing the quantity of the product produced by the production facility in response to a request from an electricity provider to suppress electric power, either for supplementing the electric power that is reduced by approving the suppression request or for conversion to electric power that is sold, and
performs control to supplement an electrical energy shortage caused by increasing the quantity of the product produced by the production facility by stored electric power or by purchased electric power.

2. An industry demand-response control system, comprising:
an energy supplying facility, installed in an industrial installation, that supplies electrical energy and non-electrical energy that are used when a product is produced;
a production facility, installed in the industrial installation, that uses the electrical energy and the non-electrical energy supplied from the energy supplying facility to produce the product; and
a facility controller that, in response to an increase and a decrease of the quantity of the product produced by the production facility, controls the proportion between the electrical energy and the non-electrical energy and/or the amounts of each of the electrical energy and the non-electrical energy supplied by the energy supplying facility,
wherein the facility controller
performs control to convert the non-electrical energy that becomes surplus by a reduction of the quantity of the product produced by the production facility in response to a request from an electricity provider to suppress electric power to the electric power, to supply the electrical energy to the production facility, and to suppress the electrical energy to satisfy the suppression request and to minimize the reduction of the quantity of the product produced, and
performs control to purchase the electrical energy which is insufficient because of increasing the quantity of the product produced by the production facility and supply the electrical energy to the production facility, and either reply to the effect that less electric power will be suppressed than was requested or not approve the suppression request.

3. An industry demand-response control system, comprising:
a production energy information storage that stores energy composition information that represents the composition of electrical energy and non-electrical energy supplied from an energy storage facility installed in an industrial installation and used when a production facility installed in the industrial installation produces a product;
a gain-loss determiner that receives, transmitted from an electricity provider, an electric power suppression request and payment information representing the price per hour of the electric power and compensation if the suppression request is approved, sets and/or provisionally sets, based on the energy composition information, the energy composition of the electrical energy and the non-electrical energy used by the production facility, calculates, based on the payment information and the energy composition information, the gain or loss in the case of producing the product with the set and/or provisionally set energy composition, and determines whether or not to approve the suppression request; and
a facility controller that, if a determination has been made by the gain-loss determiner to approve the suppression request, controls the production facility and the energy supplying facility to operate with the set and/or provisionally set energy composition.

4. The industry demand-response control system according to claim 3,
wherein the gain-loss determiner assumes a reduced quantity of the quantity of the product produced by the production facility if the suppression request is approved, converts to the electrical energy the non-electrical energy that becomes surplus when the production facility produces the assumed quality of the product, based on the energy composition information, and sets and/or provisionally sets the energy composition of each energy used by the production facility to supplement the electric power that is reduced by approving the suppression request.

5. The industry demand-response control system according to claim 4,
wherein the gain-loss determiner compares the loss by reducing the quantity of product produced by the production facility and the profit obtained by approving the suppression request and, if the difference between the loss and the profit exceeds a pre-established profit threshold, makes a determination to approve the suppression request.

6. The industry demand-response control system according to claim 4 or claim 5,
wherein the gain-loss determiner compares the profit obtained if the quantity of product produced by the production facility is increased and the loss caused by not approving the suppression request and, if the difference between the loss and the profit exceeds a pre-established profit threshold, makes a determination not to approve the suppression request.

7. The industry demand-response control system according to any one of claim 4 to claim 6,
wherein the gain-loss determiner instructs the facility controller to make the quantity of the product produced by the production facility greater if the price per hour of the electric power is less than a pre-established price threshold.

8. The industry demand-response control system according to any one of claim 4 to claim 7,
wherein the energy composition information includes information representing the ratio between the electrical energy and the non-electrical energy used when the production facility produces a product, and
the gain-loss determiner calculates the non-electrical energy amount to become surplus, based on the ratio information included in the energy composition information, and sets and/or provisionally sets the energy composition of each energy used by the production facility, and the calculated amount of non-electrical energy is converted to the electrical energy and supplied by the energy supplying facility.

9. The industry demand-response control system according to any one of claim 4 to claim 8,
wherein the energy composition information expresses the composition of the electrical energy and the non-electrical energy as information that includes at least a variable part that is dependent upon the quantity of production of a product by the production facility, and
the gain-loss determiner calculates the amount of the non-electrical energy that becomes surplus, based on the variable part information of the non-electrical energy included in the energy composition information and sets and/or provisionally sets the energy composition of each energy used by the production facility, and the energy supplying facility converts to the electrical energy and supplies the calculated amount of the non-electrical energy.

10. The industry demand-response control system according to any one of claim 4 to claim 9,
wherein the gain-loss determiner sets and/or provisionally sets the energy composition of each energy used by the production facility, and an amount of the electrical energy in accordance with an amount of the non-electrical energy that becomes surplus, converted from the non-electrical energy to the electrical energy with a conversion efficiency when converting the non-electrical energy to the electrical energy, is supplied to the production facility in combination with the electrical energy supplied from the electricity provider after suppression.

11. The industry demand-response control system according to any one of claim 4 to claim 10,
wherein the gain-loss determiner inputs to the facility controller an instruction indicating approval of the suppression request if the determination is made to approve the suppression request and the set and/or provisionally set energy composition, and
wherein the facility controller transmits to the electricity provider a signal indicating that the suppression request is approved and controls the production facility and the energy supplying facility to operate with the set and/or provisionally set energy composition input from the gain-loss determiner.

12. The industry demand-response control system according to any one of claim 4 to claim 11,
wherein the energy composition information includes information that represents the electrical energy amount and the non-electrical energy amount set for each quantity of product produced by the production facility, and
the gain-loss determiner calculates the non-electrical energy to become surplus, based on information representing the electrical energy amount and the non-electrical energy amount set for each quantity of product included in the energy composition information, and sets and/or provisionally sets the energy composition of each energy used by the production facility, and the energy supplying facility converts to the electrical energy and supplies the calculated non-electrical energy amount.

13. An industry demand-response control method comprising:
facility controlling that includes controlling the proportion between electrical energy and non-electrical energy and/or the amounts of each of the electrical energy and the non-electrical energy supplied by an energy supplying facility, in response to an increase and a decrease of the quantity of a product produced by a production facility installed in an industrial installation using the electrical energy and the non-electrical energy supplied from the energy supplying facility installed in the industrial installation,
wherein the facility controlling includes
performing control to use the non-electrical energy that becomes surplus by reducing the quantity of the product produced by the production facility in response to a request from an electricity provider to suppress electric power, either for supplementing the electric power that is reduced by approving the suppression request or for conversion to electric power that is sold, and
performing control to supplement an electrical energy shortage caused by increasing the quantity of the product produced by the production facility by stored electric power or by purchased electric power.

14. An industry demand-response control method comprising:
facility controlling that includes controlling the proportion between electrical energy and non-electrical energy and/or the amounts of each of the electrical energy and the non-electrical energy supplied by an energy supplying facility, in response to an increase and a decrease of the quantity of a product produced by a production facility installed in an industrial installation using the electrical energy and the non-electrical energy supplied from the energy supplying facility installed in the industrial installation,
wherein the facility controlling includes
performing control to convert the non-electrical energy that becomes surplus by a reduction of the quantity of the product produced by the production facility in response to a request from an electricity provider to suppress electric power to the electrical energy and to supply the electrical energy to the production facility, and suppressing the electric power to satisfy the suppression request and to minimize the reduction of the quantity of the product produced, and
performing control to purchase the electrical energy which is insufficient because of increasing the quantity of the product produced by the production facility and to supply the electrical energy to the production facility, and either reply to the effect that less electric power will be suppressed than was requested or not approve the suppression request.

15. An industry demand-response control method comprising:
receiving, transmitted from an electricity provider, an electric power suppression request and payment information representing the price per hour of the electric power and compensation if the suppression request is approved;
setting and/or provisionally setting, based on energy composition information representing the electrical energy and the non-electrical energy supplied from an energy supplying facility installed in an industrial installation and used when the production facility produces a product, the energy composition of the electrical energy and the non-electrical energy used by the production facility;
calculating the gain or loss in the case of producing the product with the set and/or provisionally set energy composition and, based on the payment information and the energy composition information, determining whether or not to approve the suppression request; and
controlling the production facility and the energy supplying facility to operate with the set and/or provisionally set energy composition if a determination has been made to approve the suppression request.

16. The industry demand-response control method according to claim 15, wherein the setting and/or provisional setting of the energy composition of the electrical energy and the non-electrical energy includes assuming a reduced quantity of the quantity of the product produced by the production facility if the suppression request is approved, converting to the electrical energy the non-electrical energy that becomes surplus when the production facility produces the assumed quality of the product based on the energy composition information, and setting and/or provisionally setting the energy composition of each energy used by the production facility to supplement the electric power that is reduced by approving the suppression request.

17. The industry demand-response control method according to claim 16, wherein the determining whether or not to approve the suppression request includes comparing the loss by reducing the quantity of product produced by the production facility and the profit obtained by approving the suppression request and, if the difference between the loss and the profit exceeds a pre-established profit threshold, making a determination to approve the suppression request.

18. The industry demand-response control method according to claim 16 or claim 17, wherein the determining whether or not to approve the suppression request includes:
comparing the profit obtained if the quantity of product produced by the production facility is increased and the loss caused by not approving the suppression request and, if the difference between the loss and the profit exceeds a pre-established profit threshold, making a determination not to approve the suppression request.

19. The industry demand-response control method according to any one of claim 16 to claim 18, further comprising
instructing the facility controller to make the quantity of the product produced by the production facility greater if the price per hour of the electric power is less than a pre-established price threshold.

20. The industry demand-response control method according to any one of claim 16 to claim 19, wherein the energy composition information includes information representing the ratio between the electrical energy and the non-electrical energy used when the production facility produces a product, and
the setting and/or provisionally setting of the energy composition of the electrical energy and the non-electrical energy includes
calculating the amount of the non-electrical energy that becomes surplus, based on the ratio included in the energy composition information included in the energy composition information and setting and/or provisionally setting the energy composition of each energy used by the production facility, and the energy supplying facility converts to the electrical energy and supplies the calculated amount of the non-electrical energy.

21. The industry demand-response control method according to any one of claim 16 to claim 20,
wherein the energy composition information expresses the composition of the electrical energy and the non-electrical energy as information that includes at least a variable part that is dependent upon the quantity of production of a product by the production facility, and the setting and/or provisionally setting the energy composition of the electrical energy and the non-electrical energy includes calculating the amount of the non-electrical energy that becomes surplus, based on the variable part information of the non-electrical energy included in the energy composition information and setting and/or provisionally setting the energy composition of each energy used by the production facility, and the energy supplying facility converts to the electrical energy and supplies the calculated amount of the non-electrical energy.

22. The industry demand-response control method according to any one of claim 16 to 21,
wherein the setting and/or provisionally setting the energy composition of the electrical energy and the non-electrical energy includes setting and/or provisionally setting the energy composition of each energy used by the production facility, and an amount of the electrical energy in accordance with an amount of the non-electrical energy that becomes surplus, converted from the non-electrical energy to the electrical energy with a conversion efficiency when converting the non-electrical energy to the electrical energy, is supplied to the production facility in combination with the electrical energy supplied from the electricity provider after suppression.

23. The industry demand-response control method according to any one of claim 16 to claim 22,
the determining of whether or not to approve the suppression request includes transmitting to the electricity provider a signal indicating that the suppression request is approved.

24. The industry demand-response control method according to any one of claim 16 to claim 23,
wherein the energy composition information includes information that represents the electrical energy amount and the non-electrical energy amount set for each quantity of product produced by the production facility, and the setting and/or provisionally setting the energy composition of the electrical energy and the non-electrical energy includes calculating the non-electrical energy to become surplus, based on information representing the electrical energy amount and the non-electrical energy amount set for each quantity of product included in the energy composition information, and setting and/or provisionally setting the energy composition of each energy used by the production facility, and the energy supplying facility converts to the electrical energy and supplies the calculated amount of non-electrical energy.
